# EUROPÄISCHE PATENTSCHRIFT

(11) **EP 4 264 093 B1**
(45) Veröffentlichungstag und Bekanntmachung des Hinweises auf die Patenterteilung: **18.03.2026**
(21) Anmeldenummer: 21794336.4
(22) Anmeldetag: 13.10.2021
(51) Int. Cl.: F16K 11/044, F16K 31/04, F16K 39/02, F16K 11/056, F25B 41/35

(54) **PROPORTIONALVENTILANORDNUNG FÜR KÄLTEMITTEL**
PROPORTIONAL VALVE ASSEMBLY FOR REFRIGERANTS
ENSEMBLE SOUPAPE PROPORTIONNELLE DESTINÉ À DES FLUIDES FRIGORIGÈNES

(30) Priorität: 18.12.2020 DE 102020134259
(43) Veröffentlichungstag der Anmeldung: 25.10.2023
(73) Patentinhaber: ECO Holding 1 GmbH, 97828 Marktheidenfeld (DE)
(72) Erfinder: MAISCH, Dieter, 72664 Kohlberg (DE); WEBER, Hartmut, 72655 Altdorf (DE)
(74) Vertreter: Keller Schneider Patentanwaltsgesellschaft mbH
(86) Internationale Anmeldenummer: PCT/EP2021/078338
(87) Internationale Veröffentlichungsnummer: WO 2022/128203

(56) Entgegenhaltungen:
- EP-A1- 0 058 559
- EP-A1- 0 907 045
- EP-A1- 2 700 853
- CN-A- 106 931 186
- JP-A- 2013 221 578
- US-A- 4 561 468
- US-A1- 2008 245 427

## Beschreibung

### Technisches Gebiet

Die Erfindung betrifft eine Proportionalventilanordnung für Kältemittel, mit einem eine Ventilkörperkammer aufweisendes Ventilgehäuse, einem Ventilkörper, welcher innerhalb der Ventilkörperkammer angeordnet und zwischen einer ersten Position und einer zweiten Position überführbar ausgebildet ist.

Derartige Proportionalventilanordnungen werden beispielsweise für Fluidsysteme von zumindest teilweise elektrisch betriebenen Kraftfahrzeugen eingesetzt. Derartige Proportionalventile werden auch Stetigventile oder Wegeventile genannt, wobei zumindest im Bereich der Kraftfahrzeuge hohe Anforderungen gestellt werden.

Beispielsweise können die Fluide in flüssigem oder gasförmigem Aggregatzustand anliegen. Zudem gelten sehr hohe interne Dichtigkeitsanforderungen, die sowohl im flüssigen als auch im gasförmigen Zustand des Fluides gelten. Ebenso gelten diese Dichtigkeitsanforderungen auch nach Außen hin. In der Konsequenz muss die Proportionalventilanordnung Rahmenbedingungen gerecht werden, dass kein druckentlasteter Anschluss an dem Ventil vorherrscht und kein gesicherter Druckabbau erfolgen kann.

Bei grossen Kolbendurchmessern kommt es insbesondere bei grossen Druckunterschieden in Ventilen häufig zu grossen axial auf den Kolben wirkenden hydraulischen oder pneumatischen Kräften. Dadurch ist es notwendig, dass grosse Betätigungskräfte gebraucht werden, um die Ventile zu betätigen. Dies geschieht meist durch Antriebe mit entsprechender Grösse zu entsprechenden I<osten.

Im Stand der Technik sind Proportionalventilanordnungen beispielsweise in EP 2 700 853 A1, EP 0 907 045 A1, JP 2013 221578 A, EP 0 058 559 A1 (gemäß der Präambel von Anspruch 1), und US 2008/245428 A1 beschrieben. Die Ventilkörper dieser Proportionalventilanordnungen unterliegen einem hohen Verschleiß, was den Wartungsaufwand erhöht.

### Darstellung der Erfindung

Aufgabe der Erfindung ist es, eine dem eingangs genannten technischen Gebiet zugehörende Ventileinrichtung zu schaffen, welche die Nachteile aus dem Stand der Technik zumindest teilweise überwindet. Insbesondere ist es die Aufgabe der Erfindung eine Ventileinrichtung vorzuschlagen, welche die hohen Betätigungskräfte für Ventile mit grossen Querschnitten reduziert.

Die Lösung der Aufgabe ist durch die Merkmale des Anspruchs 1 definiert. Die Erfindung betrifft eine Proportionalventilanordnung für Kältemittel, mit einem eine Ventilkörperkammer aufweisendes Ventilgehäuse, einem Ventilkörper, welcher innerhalb der Ventilkörperkammer angeordnet und zwischen einer ersten Position und einer zweiten Position überführbar ausgebildet ist, wobei das Ventilgehäuse einen ersten Dichtsitz und einen zweiten Dichtsitz aufweist, und der Ventilkörper zwischen dem ersten Dichtsitz und dem zweiten Dichtsitz überführbar ist.

Ventile dienen allgemein zur Absperrung und/oder Steuerung des Durchflusses eines Fluids. Einfachere Ventile sind nur diskret steuerbar. Das bedeutet, dass diese nur auf/zu schaltbar sind, also nur geöffnet und geschlossen werden können. Allerdings reicht ein einfaches Öffnen und Schließen des Ventils für viele Anwendungen nicht mehr aus. Beispielsweise verlangt der Einsatz als Expansionsventil, das in Batteriekühl-, Klima- oder Wärmepumpensystem eingesetzt ist, um dort einen definierten und steuerbaren Druckabfall zwischen Kondensator (Wärmeabgabe) und Verdampfer (Kühlung) zu erzeugen, oftmals ein kontinuierlicheres Schalten. Insgesamt wird daher häufig ein kontinuierliches Schalten gefordert. Ein derartiges kontinuierliches bzw. stetiges Schalten kann beispielsweise mittels Proportionalventilen erfolgen, die einen stetigen Übergang der Schaltstellungen zulassen. Damit ist der Volumenstrom des Fluids einstellbar. Solche Proportionalventile lassen mit Hilfe eines Proportionalmagneten also nicht nur diskrete Schaltstellungen zu, sondern erlauben einen stetigen Übergang der Ventilöffnung.

Ein Kältemittel im Sinne der Erfindung ist als Fluid zu verstehen, welches zur Wärmeübertragung in einer Kälteanlage eingesetzt wird, und das bei niedriger Temperatur und niedrigem Druck Wärme aufnimmt und bei höherer Temperatur und höherem Druck Wärme abgibt, wobei üblicherweise Zustandsänderungen des Fluids erfolgen.

Daraus ergibt sich beispielsweise der technische Vorteil, dass die Proportionalventilanordnung jede Position des Ventilkörpers zwischen dem ersten Dichtsitz und dem zweiten Dichtsitz präzise einnehmen kann. Daraus ergibt sich der weitere Vorteil, dass die Proportionalventilanordnung kontinuierlich geschaltet werden kann und der Volumenstrom exakt steuerbar ist. Hinzu kommt der Vorteil, dass sich beispielsweise ein Schrittmotor als Antrieb für die Proportionalventilanordnung eignet, wodurch keine Rückstellfeder oder dergleichen zum Schliessen der Proportionalventilanordnung nötig ist.

Erfindungsgemäß weist der Ventilkörper einen kugelförmigen Abschnitt auf, welcher zwischen dem ersten Dichtsitz und dem zweiten Dichtsitz überführbar angeordnet ist. Dadurch ergibt sich beispielsweise der technische Vorteil, dass eine optimale Dichtigkeit sowohl in der Anlage im ersten Dichtsitz als auch in der Anlage im zweiten Dichtsitz immer gegeben ist. Die Symmetrie des kugelförmigen Körpers bewirkt eine Funktionsweise mit wenig Verschleiss, da die Orientierung des Ventilkörpers beim Eintreten in den ersten Dichtsitz oder in den zweiten Dichtsitz unabhängig von der Funktion ist. Mit anderen Worten gewährt der Kugelsitz Dichtigkeit auch bei einer Schiefstellung des Ventilkörpers. Beispielsweise ist sowohl der kugelförmige Anschnitt des Ventilkörpers als auch der Dichtsitz aus einem metallischen Werkstoff hergestellt. Beispielsweise eignet sich hierbei Aluminium oder Edelstahle sowohl für den Dichtsitz als auch für den kugelförmigen Ventilkörper. Ein zusätzlicher Vorteil besteht darin, dass zwischen dem kugelförmigen Ventilkörper und dem Dichtsitz nur sehr kleine Anlageflächen bestehen. Dies reduziert zusätzlich den Verschleiss und verbessert die Dichtigkeit und die Verschlusssicherheit der Proportionalventilanordnung.

Bei der Erfindung umfasst der Ventilkörper einen ersten Führungsabschnitt und einen zweiten Führungsabschnitt zum Führen des Ventilkörpers in dem Ventilgehäuse, wobei zwischen dem ersten Führungsabschnitt und dem zweiten Führungsabschnitt der kugelförmige Abschnitt angeordnet ist. Dadurch wird beispielweise der technische Vorteil erreicht, dass eine präzise Führung des Ventilkörpers möglich ist und ein Kippen des Ventilkörpers verhindert wird. Dies führt zusätzlich zu einer weiteren Verschleissreduzierung und somit zu einer längeren Einsatzdauer der Proportionalventilanordnung.

Nach einer besonders bevorzugten Ausführungsform ist zwischen dem ersten Führungsabschnitt und dem kugelförmigen Abschnitt ein erster Zwischenraum ausgebildet. Der Zwischenraum wird dadurch ausgebildet, indem der Durchmesser des Ventilkörpers in diesem Abschnitt geringer ist als im ersten Führungsabschnitt oder im kugelförmigen Abschnitt. Dieser reduzierte Durchmesser gibt einen ersten Zwischenraum frei, welcher Fluid aufnehmen kann und eine Umströmung des Ventilkörpers zwischen zwei benachbarten Anschlüssen vereinfacht. Zusätzlich wird durch den ersten Zwischenraum die Druckangriffsfläche des kugelförmigen Abschnitts vergrössert.

Gemäss einer besonders bevorzugten Ausführungsform weist in einem Zustand in welchem der Ventilkörper an dem ersten Dichtsitz anliegt, eine axiale Projektionsfläche des ersten Zwischenraums in Richtung des ersten Führungsabschnitts die gleiche Grösse auf wie eine axiale Projektionsfläche des ersten Zwischenraums in Richtung des kugelförmigen Abschnitts. Mit anderen Worten ist der Durchmesser des ersten Dichtsitzes identisch mit dem Durchmesser des ersten Führungsabschnittes. Daraus ergibt sich beispielsweise der technische Vorteil, dass die axialen Komponenten der Projektionsflächen in diesem Zustand identisch sind, wodurch sich in Axialrichtung bei Fluiddruck ein ausgeglichenes Kräftegleichgewicht des Ventilkörpers ergibt. Dieser Kraftausgleich wiederrum vereinfacht es für den Antrieb den Ventilkörper zu bewegen bzw. von einer ersten Position in eine zweite Position zu überführen.

Eine weitere Konsequenz daraus ergibt sich im Falle eine Stromausfalls oder eines Defekts beim Antrieb. In einem derartigen Fall würde der Ventilkörper in seiner Position verbleiben, da dieser nicht durch eine Rückstellfeder in eine Ruheposition oder Schliessposition überführt würde.

Nach einer weiteren besonders bevorzugten Ausführungsform ist zwischen dem zweiten Führungsabschnitt und dem kugelförmigen Abschnitt ein zweiter Zwischenraum ausgebildet. Auch dieser Zwischenraum wird dadurch ausgebildet, indem der Durchmesser des Ventilkörpers in diesem Abschnitt geringer ist als im zweiten Führungsabschnitt oder im kugelförmigen Abschnitt. Dieser reduzierte Durchmesser gibt einen ersten Zwischenraum frei, welcher Fluid aufnehmen kann und eine Umströmung des Ventilkörpers zwischen zwei benachbarten Anschlüssen vereinfacht. Zusätzlich wird durch den zweiten Zwischenraum die Druckangriffsfläche des kugelförmigen Abschnitts vergrössert.

Gemäss einer weiteren Ausführungsform weist in einem Zustand in welchem der Ventilkörper an dem zweiten Dichtsitz anliegt, eine axiale Projektionsfläche des zweiten Zwischenraums in Richtung des kugelförmigen Abschnitts die gleiche Grösse auf wie eine axiale Projektionsfläche des zweiten Zwischenraums in Richtung des zweiten Führungsabschnitts.

Mit anderen Worten ist der Durchmesser des ersten Dichtsitzes identisch mit dem Durchmesser des zweiten Führungsabschnittes. Daraus ergibt sich beispielsweise der technische Vorteil, dass die axialen Komponenten der Projektionsflächen in diesem Zustand identisch sind, wodurch sich in Axialrichtung bei Fluiddruck ein ausgeglichenes Kräftegleichgewicht des Ventilkörpers ergibt. Dieser Kraftausgleich wiederrum vereinfacht es für den Antrieb den Ventilkörper zu bewegen bzw. von einer ersten Position in eine zweite Position zu überführen. In Verbindung mit einem Druckbypass, kann innerhalb der Proportionalventilvorrichtung auch ein Druckausgleich erfolgen. Insgesamt ist die Proportionalventilvorrichtung somit Druck- und I<raftausgeglichen. Die Druckausgeglichenheit wird hierbei durch den Druckbypass und die druckbeaufschlagte Flächengleichheit erzielt, während sich die I<raftausgeglichenheit beispielsweise durch das nicht vorhandene Rückstellelement ergibt.

Auch in dieser Konstellation ergibt sich im Falle eines Stromausfalls oder eines Defekts beim Antrieb die Konsequenz, dass der Ventilkörper in seiner Position verbleiben würde, da dieser nicht durch eine Rückstellfeder in eine Ruheposition oder Schliessposition überführt wird.

Nach einer besonderen Ausführungsform weist das Ventilgehäuse einen Zuströmanschluss, einen ersten Ausströmanschluss und einen zweiten Ausströmanschluss auf. Dadurch wird beispielsweise der technische Vorteil erreicht, dass der Einsatz der Proportionalventilanordnung flexibler und vielseitiger möglich ist. Beispielsweise ist die Proportionalventilanordnung als 3/2 Wegeventil ausgebildet. Somit hätte die Proportionalventilanordnung beispielsweise drei nebeneinander angeordnete Anschlüsse. Durch das Überführen des Ventilkörpers von dem ersten Dichtsitz in den zweiten Dichtsitz kann Fluid aus dem Zuströmanschluss sowohl in den ersten Ausströmanschluss und/ oder in den zweiten Ausströmanschluss geströmt werden. Insbesondere in Verbindung mit der kraftausgeglichenen Konstellation der vorstehenden Ausführungsformen ergibt sich nun der zusätzliche Vorteil, dass der Ventilkörper unabhängig von der Position zwischen dem ersten Dichtsitz und dem zweiten Dichtsitz leicht betätigbar ist. Dies gilt auch unabhängig von der Fluiddrucksituation, welche sich an dem Zuström- und an den Ausströmanschlüssen ergibt. Mit anderen Worten ist der Ventilkörper unabhängig von der Frage, welcher Druck sich an welchem Zuström- und an welchen Ausströmanschlüssen ergibt, kraftausgeglichen und somit für einen Antrieb leicht verstellbar ausgebildet. Beispielsweise ist diese Konstellation eines 3/2 Wegeventils auch auf andere Konstellationen erweiterbar.

Um den Kraftausgleich des Ventilkolbens zu verbessern, weist die Proportionalventilanordnung einen Druckbypass auf, welcher den zweiten Ausströmanschluss mit der Ventilkörperkammer verbindet. Dadurch wird beispielsweise der technische Vorteil erreicht, dass ein Druckausgleich durch Kolben hindurch auf eine symmetrische Weise und ohne externen Bypass möglich ist. Dies erlaubt eine kompakte Bauweise und ermöglicht eine besonders einfache Herstellung.

Nach einer weiteren Ausführungsform weist der Druckbypass eine Kommunikationsverbindung durch den Ventilkörper hindurch auf. Beispielsweise erstreckt sich die Kommunikationsverbindung entlang der geometrischen Längsachse des Ventilkörpers. Dadurch wird beispielsweise der technische Vorteil erreicht, dass das Kältemittel unmittelbar durch den Ventilkörper hindurchströmen kann. Daraus ergibt sich ein einfacher und symmetrischer Druckausgleich des Kältemittels, was insgesamt die kraftausgeglichene Konstellation des Ventilkolbens ermöglicht. Gleichzeitig ermöglicht dies eine einfache und kostengünstige Herstellung des Druckbypass.

Besonders bevorzugt weist die Proportionalventilanordnung einen elektrisch betätigbaren Antrieb zum proportionalen Betätigen des Ventilkörpers auf. Dadurch wird beispielsweise der technische Vorteil erreicht, dass eine stetige Verstellung des Ventilkörpers möglich ist. Beispielsweise umfasst der Antrieb einen Schrittmotor. Der Schrittmotor braucht hierbei nicht viel Kraft aufzubringen, da ein .Kraftausgleich des Ventilkolbens besteht. Zusätzlich vorteilhaft ist der Einsatz eines elektrischen Antriebs auch im Zusammenhang mit einem möglichen Defekt oder mit einem Stromausfall. In einem derartigen Fall verbleibt der Ventilkörper in der letzten Position und wird aufgrund des Fehlens einer Rückstellfeder und der vorherrschenden Selbsthemmung nicht in eine Endlage oder in eine gewünschte Position überführt.

Gemäss einer weiteren besonderen Ausführungsform ist der Antrieb zumindest teilweise in der Ventilkörperkammer angeordnet. Beispielsweise sind der Rotor und die durch den Rotor angetrieben Spindel innerhalb der Ventilkörperkammer angeordnet. Dadurch wird beispielsweise der technische Vorteil erreicht, dass eine sehr kompakte Bauart möglich ist. Zusätzlich lassen sich Leckagen und Undichtigkeiten effektiv reduzieren, weil Rotor und Spindel in der Ventilkörperkammer integriert angeordnet und damit weniger Dichtungen und Schnittstellen notwendig sind.

Nach einer besonderen Ausführungsform umfasst der Antrieb einen Schrittmotor, welcher über eine Spindel mit dem Ventilkörper verbunden ist. Dadurch wird beispielsweise der technische Vorteil erreicht, dass eine direkte und präzise Verstellung des Ventilkörpers möglich ist. Wenn die Stromzufuhr entfällt oder ein Defekt am Schrittmotor auftritt, verbleibt der Ventilkörper in der letzten Position.

Nach einer weiteren vorteilhaften Ausführungsform ist die Spindel mit einem Hohlschaft selbsthemmend verbunden. Die Selbsthemmung beschreibt in der Mechanik den durch Reibung verursachten Widerstand gegen ein Verrutschen oder ein Verdrehen zweier aneinander liegender Körper. Die Selbsthemmung wird durch den Neigungswinkel, die Oberflächenrauigkeit der Auflageflächen, die Werkstoffpaarung, durch den Schmierstoff und die Erwärmung beeinflusst. Der Hohlschaft ist fest mit dem Ventilgehäuse verbunden, wobei die Spindel über ein Gewinde mit dem Hohlschaft in Wechselwirkung liegt. Die Rotation des Antriebs wird auf die Spindel übertragen, wodurch sich die axiale Position der Spindel verändert. Die Selbsthemmung ist durch das Gewinde zwischen Hohlschaft und Spindel realisiert, wodurch beispielsweise der technische Vorteil erreicht wird, dass auch bei Druckunterschieden kein Verstellen des Ventilkörpers stattfindet.

Gemäss einer weiteren Variante betrifft die Erfindung eine Proportionalventilanordnung für Kältemittel mit einem eine Ventilkörperkammer aufweisendes Ventilgehäuse, einem Ventilkörper, welcher innerhalb der Ventilkörperkammer angeordnet und zwischen einem ersten Dichtsitz und einem zweiten Dichtsitz überführbar ausgebildet ist, einem elektrisch betätigbaren Antrieb, welcher über eine Spindel mit dem Ventilkörper verbunden ist, wobei zwischen der Spindel und dem Ventilkörper eine Schliessvorrichtung zum Erzeugen einer axialen Vorspannung zwischen dem Ventilkörper und dem ersten Dichtsitz bei Anlage des Ventilkörpers an den ersten Dichtsitz und einer axialen Vorspannung zwischen dem Ventilkörper und dem zweiten Dichtsitz bei Anlage des Ventilkörpers an den zweiten Dichtsitz angeordnet ist.

Daraus ergibt sich beispielsweise der technische Vorteil, dass die Proportionalventilanordnung jede Position des Ventilkörpers zwischen dem ersten Dichtsitz und dem zweiten Dichtsitz präzise einnehmen kann. Daraus ergibt sich der weitere Vorteil, dass die Proportionalventilanordnung kontinuierlich geschaltet werden kann und der Volumenstrom exakt steuerbar ist. Hinzu kommt der Vorteil, dass die Schliessvorrichtung sowohl bei Anlage des Ventilkörpers an dem ersten Dichtsitz als auch bei Anlage des Ventilkörpers an den zweiten Dichtsitz eine axiale Vorspannung erzeugt, wodurch ein hohes Mass an Schliesssicherheit gegeben ist. Ein weiterer Vorteil ergibt sich insbesondere in Verbindung mit der Spindel, wenn diese den Ventilkörper in eine Endlage überführt. Hierbei wird durch die Schliessvorrichtung verhindert, dass sich der Ventilkörper in der Endlage im Dichtsitz verklemmt. Somit verbessert die Schliessvorrichtung die Funktion und die Lebensdauer der Proportionalventilanordnung.

Nach einer bevorzugten Ausführungsform weist der Ventilkörper einen gestuften Einbauraum zur Aufnahme der Spindel und der Schliessvorrichtung auf. Dadurch wird beispielsweise der technische Vorteil erreicht, dass die Proportionalventilanordnung besonders kompakt ausgebildet ist. Spindel und Schliessvorrichtung sind zumindest teilweise in den Ventilkörper integriert. Der gestufte Einbauraum ist leicht herstellbar und die Montage der Proportionalventilanordnung wird erleichtert.

Gemäss einer bevorzugten Ausführungsform umfasst die Schliessvorrichtung ein Federelement, welches in Bezug auf die Spindel koaxial angeordnet ist. Dadurch wird beispielsweise der technische Vorteil erreicht, dass die Proportionalventilanordnung noch kompakter ausgebildet ist. Das Federelement der Schliessvorrichtung erfüllt hierbei eine Doppelfunktion. Einerseits ist das Federelement dazu ausgebildet eine axiale Vorspannung zwischen dem Ventilkörper und der Spindel bei Anlage des Ventilkörpers an den ersten Dichtsitz zu erzeugen. Gleichzeitig ist das Federelement dazu ausgebildet eine axiale Vorspannung zwischen dem Ventilkörper und der Spindel bei Anlage des Ventilkörpers an den zweiten Dichtsitz zu erzeugen.

Nach einer weiteren vorteilhaften Ausführungsform ist das Federelement dazu ausgebildet ist eine axiale Vorspannung zwischen der Spindel und einem ersten Anschlag des gestuften Einbauraums zu bewirken. Dadurch wird beispielsweise der technische Vorteil erreicht, dass sich die Spindel gegen die Vorspannung des Federelements zumindest teilweise in axialer Richtung weiterbewegen kann, wenn der Ventilkörper bereits in Anlage mit dem zweiten Dichtungssitz gelangt ist. Hierdurch wird ein definierter Schließdruck des Ventilkörpers im Sitz eingestellt. Durch die koaxiale Anordnung des Federelements mit der Spindel, wird die axiale Bewegung der Spindel somit gedämpft, wodurch ein Festklemmen in der Endlage des Ventilkörpers verhindert wird.

Gemäss einer zusätzlichen Ausführungsform ist das Federelement dazu ausgebildet eine axiale Vorspannung zwischen der Spindel und einem zweiten Anschlag des gestuften Einbauraums zu bewirken. Dadurch wird beispielsweise der technische Vorteil erreicht, dass sich die Spindel gegen die Vorspannung des Federelements zumindest teilweise in axialer Richtung weiterbewegen kann, wenn der Ventilkörper bereits in Anlage mit dem ersten Dichtungssitz gelangt ist. Durch die koaxiale Anordnung des Federelements mit der Spindel, wird die axiale Bewegung der Spindel somit auch in die entgegengesetzte Bewegungsrichtung gedämpft, wodurch ein Festklemmen in der entgegengesetzten Endlage des Ventilkörpers verhindert und ein definierter Schließdruck des Ventilkörpers im Sitz eingestellt wird.

Nach einer weiteren vorteilhaften Ausführungsform ist die Spindel mit einem Hohlschaft selbsthemmend verbunden. Die Selbsthemmung beschreibt in der Mechanik den durch Reibung verursachten Widerstand gegen ein Verrutschen oder ein Verdrehen zweier aneinander liegender Körper. Die Selbsthemmung wird durch den Neigungswinkel, die Oberflächenrauigkeit der Auflageflächen, die Werkstoffpaarung, durch den Schmierstoff und die Erwärmung beeinflusst. Der Hohlschaft ist fest mit dem Ventilgehäuse verbunden, wobei die Spindel über ein Gewinde mit dem Hohlschaft in Wechselwirkung liegt. Die Rotation des Antriebs wird auf die Spindel übertragen, wodurch sich die axiale Position der Spindel verändert. Die Selbsthemmung ist durch das Gewinde zwischen Hohlschaft und Spindel realisiert, wodurch beispielsweise der technische Vorteil erreicht wird, dass auch bei Druck- und I<raftunterschieden kein Verstellen des Ventilkörpers stattfindet, auch wenn der Antrieb in einer beliebigen Hubstellung unbestromt geschaltet wird.

Gemäss einer zusätzlichen vorteilhaften Ausführungsform weist das Ventilgehäuse einen Zuströmanschluss und zumindest einen Ausströmanschluss auf. Beispielsweise weist das Ventilgehäuse einen Zuströmanschluss und zumindest zwei Ausströmanschluss auf. Zusätzlich sind auch weitere Anschlüsse zum Zuströmen oder Ausströmen denkbar. Dadurch wird beispielsweise der technische Vorteil erreicht, dass der Einsatz der Proportionalventilanordnung flexibler und vielseitiger möglich ist. Beispielsweise ist die Proportionalventilanordnung als 3/2 Wegeventil ausgebildet. Somit hätte die Proportionalventilanordnung beispielsweise drei nebeneinander angeordnete Anschlüsse. Durch das Uberführen des Ventilkörpers von dem ersten Dichtsitz in den zweiten Dichtsitz kann Fluid aus dem Zuströmanschluss sowohl in den ersten Ausströmanschluss und/ oder in den zweiten Ausströmanschluss geströmt werden. Dies gilt auch unabhängig von der Fluiddrucksituation, welche sich an dem Zuström- und an den Ausströmanschlüssen ergibt. Mit anderen Worten ist der Ventilkörper unabhängig von der Frage, welcher Druck sich an welchem Zuström- und an welchen Ausströmanschlüssen ergibt, kraftausgeglichen und somit für einen Antrieb leicht verstellbar ausgebildet. Beispielsweise ist diese Konstellation eines 3/2 Wegeventils auch auf andere Konstellationen erweiterbar.

Nach einer weiteren besonders vorteilhaften Ausführungsform weist die Proportionalventilanordnung einen Druckbypass auf, welcher den Ausströmanschluss mit der Ventilkörperkammer verbindet. Dadurch wird beispielsweise der technische Vorteil erreicht, dass ein Druckausgleich durch Kolben hindurch auf eine symmetrische Weise und ohne externen Bypass möglich ist. Dies erlaubt eine kompakte Bauweise und ermöglicht eine besonders einfache und kostengünstige Herstellung einer kraftausgeglichenen Proportionalventilanordnung. Die wirksamen druckbeaufschlagten Flächen an dem Ventilkörper sind so ausgelegt, dass die Flächen, welche den Verstellkörper nach rechts bewegen, gleich groß sind, wie die Flächen die diesen nach links beaufschlagen. Über den Bypass ergibt sich links und rechts derselbe Druck (druckausgeglichen) auf die Flächen und damit ein Kräftegleichgewicht am Verstellkörper. Diese Auslegung, in Verbindung mit einem Schrittmotor und damit nicht vorhandenem Rückstellelement, ergibt ein komplett kraftausgeglichenes System, so dass die Selbsthemmung keine oder nur sehr geringe Kräfte halten muss.

Gemäss einer darauf aufbauenden Ausführungsform weist der Druckbypass eine Kommunikationsverbindung durch den Ventilkörper hindurch auf. Beispielsweise erstreckt sich die Kommunikationsverbindung entlang der geometrischen Längsachse des Ventilkörpers. Dadurch wird beispielsweise der technische Vorteil erreicht, dass das Kältemittel unmittelbar durch den Ventilkörper hindurchströmen kann. Daraus ergibt sich ein einfacher und symmetrischer Druckausgleich des Kältemittels, was insgesamt die kraftausgeglichene Konstellation des Ventilkolbens ermöglicht.

Nach einer weiteren bevorzugten Ausführungsform ist der gestufte Einbauraum zur Aufnahme der Spindel und der Schliessvorrichtung in der Kommunikationsverbindung des Ventilkörpers angeordnet. Dadurch ergibt sich beispielsweise der technische Vorteil, dass die Proportionalventilanordnung besonders kompakt und platzsparend ausgebildet ist. Zusätzlich ergibt sich der Vorteil, dass der gestufte Einbauraum Teil der Kommunikationsverbindung zum Zweck des Druckausgleichs ist, wodurch zumindest ein Teil der Spindel und die Schliessvorrichtung unmittelbar von Fluid umströmbar direkt in den Bypass integriert sind.

Gemäss eine zusätzlichen Ausführungsform weist der Ventilkörper einen kugelförmigen Abschnitt auf, welcher zwischen dem ersten Dichtsitz und dem zweiten Dichtsitz überführbar angeordnet ist. Dadurch ergibt sich beispielsweise der technische Vorteil, dass eine optimale Dichtigkeit sowohl in der Anlage im ersten Dichtsitz als auch in der Anlage im zweiten Dichtsitz immer gegeben ist. Die Symmetrie des kugelförmigen Körpers bewirkt eine Funktionsweise mit wenig Verschleiss, da die Orientierung des Ventilkörpers beim Eintreten in den ersten Dichtsitz oder in den zweiten Dichtsitz unabhängig von der Funktion ist. Mit anderen Worten gewährt der Kugelsitz Dichtigkeit auch bei einer Schiefstellung des Ventilkörpers. Beispielsweise ist sowohl der kugelförmige Abschnitt des Ventilkörpers als auch der Dichtsitz aus einem metallischen Werkstoff hergestellt. Beispielsweise eignet sich hierbei Aluminium oder Edelstahle sowohl für den Dichtsitz als auch für den kugelförmigen Ventilkörper. Ein zusätzlicher Vorteil besteht darin, dass zwischen dem kugelförmigen Ventilkörper und dem Dichtsitz nur sehr kleine Anlageflächen bestehen. Dies reduziert zusätzlich den Verschleiss und verbessert die Dichtigkeit und die Verschlusssicherheit der Proportionalventilanordnung.

Um eine möglichst präzise Einstellung des Ventilkörpers zu realisieren, ist der Antrieb zum proportionalen Betätigen des Ventilkörpers ausgebildet. Dadurch wird beispielsweise der technische Vorteil erreicht, dass eine stetige Verstellung des Ventilkörpers möglich ist. Beispielsweise umfasst der Antrieb einen Schrittmotor. Der Schrittmotor braucht hierbei nicht viel Kraft aufbringen, da ein .Kraftausgleich des Ventilkolbens besteht. Zusätzlich vorteilhaft ist der Einsatz eines elektrischen Antriebs auch im Zusammenhang mit einem möglichen Defekt oder mit einem Stromausfall. In einem derartigen Fall verbleibt der Ventilkörper in der letzten Position und wird aufgrund des Mangels einer Rückstellfeder und der vorherrschenden Selbsthemmung nicht in eine Endlage oder in eine gewünschte Position überführt. Daraus ergibt sich beispielsweise der zusätzliche Vorteil, dass durch Abschalten des Schrittmotors in jeder beliebigen Hubstellung Energie eingespart werden kann. Dies ist beispielsweise gegenüber Lösungen vorteilhaft, welche mit einem Proportionalmagneten betrieben werden, weil ein Proportionalmagnet zum Halten einer bestimmten Stellung des Ventilkörpers dauerhaft mit Energie versorgt werden muss. Somit spart der Einsatz eines Schrittmotors Energie ein, was insbesondere in der Elektromobilität von grosser Bedeutung ist.

Nach einer zusätzlichen Ausführungsform ist der Antrieb zumindest teilweise in der Ventilkörperkammer angeordnet. Beispielsweise sind der Rotor und die durch den Rotor angetrieben Spindel innerhalb der Ventilkörperkammer angeordnet. Dadurch wird beispielsweise der technische Vorteil erreicht, dass eine sehr kompakte Bauart möglich ist. Zusätzlich lassen sich Leckagen und Undichtigkeiten effektiv reduzieren, weil Rotor und Spindel in der Ventilkörperkammer integriert angeordnet und damit weniger Dichtungen und Schnittstellen notwendig sind.

Gemäss einer zusätzlichen Ausführungsform umfasst der Antrieb einen Schrittmotor. Dadurch wird beispielsweise der technische Vorteil erreicht, dass eine direkte und präzise Verstellung des Ventilkörpers möglich ist. Beispielsweise ist der Schrittmotor direkt über eine Spindel mit dem Ventilkörper verbunden.

Eine weitere Variante betrifft ein Wegeventil, vorzugsweise für Kältemittel mit wenigstens zwei Schaltstellungen, welches ein Ventilgehäuse und einem im Ventilgehäuse entlang einer Längsachse axial verschiebbaren Ventilkolben sowie einen den Ventilkolben axial bewegenden Antrieb umfasst. Das Ventilgehäuse weist radiale Anschlüsse auf, wobei zwei Arbeitsanschlüsse vorgesehen sind, zwischen welchen ein Druckanschluss angeordnet ist, wobei der Ventilkolben druckausglichen ausgebildet ist.

Eine erste Ausführungsform betrifft ein Wegeventil, vorzugsweise für Kältemittel, mit wenigstens zwei Schaltstellungen, umfassend ein Ventilgehäuse und einem im Ventilgehäuse entlang einer Längsachse axial verschiebbaren Ventilkolben sowie einen den Ventilkolben axial bewegenden Antrieb, wobei das Ventilgehäuse radiale Anschlüsse aufweist, wobei zwei Arbeitsanschlüsse vorgesehen sind, zwischen welchen ein Druckanschluss angeordnet ist, wobei der Ventilkolben druckausglichen ausgebildet ist.

Nach einer vorteilhaften Ausführungsform weist der Ventilkolben einen kugelförmigen Abschnitt auf, wobei der kugelförmige Abschnitt zur Abdichtung des jeweiligen, nicht beaufschlagten Arbeitsanschlusses gegen den Druckanschluss an das Ventilgehäuse anlegbar ist.

Nach einer weiteren Ausführungsform ist beine zweite Dichtung zur gegenseitigen Abdichtung der Arbeitsanschlüsse vorgesehen.

Nach einer weiteren Ausführungsform ist die zweite Dichtung als doppelwirkende Stangendichtung vorgesehen ist oder umfasst zwei einfachwirkende Stangendichtungen.

Nach einer weiteren Ausführungsform ist eine in beide Betätigungsrichtungen des Ventilkolbens wirkende Baugruppe in einem gestuften Einbauraum vorgesehen, wobei die Baugruppe eine Spiralfeder umfasst, welche an zwei Widerlagern anlegbar ist.

Nach einer weiteren Ausführungsform ist eine Stoppgeometrie vorgesehen, um einen Hub des Wegeventils auf eine vorgegebene Anzahl von Umdrehungen zu begrenzen.

Nach einer weiteren Ausführungsform ist zur Sensierung einer Axialposition einer Antriebsspindel des Antriebs ein Untersetzungsgetriebe vorgesehen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Seitenansicht eines Wegeventils gemäß der vorliegenden Erfindung;
- Fig. 2: einen Längsschnitt des Wegeventils gemäß Fig. 1;
- Fig. 3: einen Längsschnitt eines Wegeventils gemäß einem zweiten Ausführungsbeispiel;
- Fig. 4: einen Längsschnitt einer Teilansicht einer Proportionalventilanordnung;
- Fig. 5: eine vergrösserte Teilansicht eines Proportionalventilanordnung; und
- Fig. 6A, 6B, 6C: weitere Teilansichten eines Proportionalventils in verschiedenen Schaltstellungen.

Grundsätzlich sind in den Figuren gleiche Teile mit gleichen Bezugszeichen versehen.

### Wege zur Ausführung der Erfindung

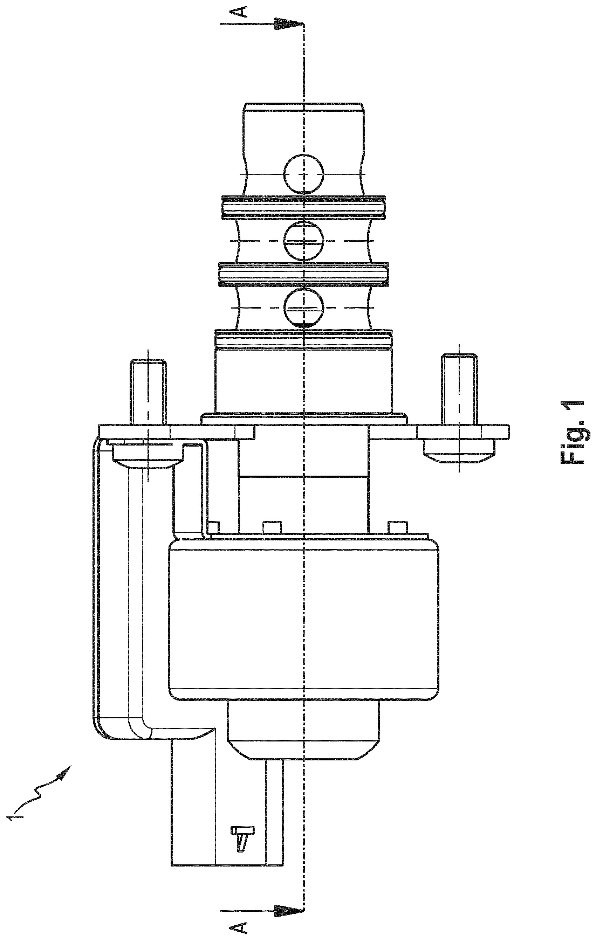

Figur 1 zeigt ein erfindungsgemäßes 3/2-Wegeventil 1 in einer Seitenansicht. Das Wegeventil 1 findet beispielsweise Verwendung als I<ältemittelventil in einem Fluidsystem eines zumindest teilweise elektrisch betriebenen Fahrzeugs. Das Wegeventil 1 weist zwei Schaltstellungen auf und umfasst ein Ventilgehäuse 2 und einem im Ventilgehäuse 2 entlang einer Längsachse axial verschiebbaren Ventilkolben 3 sowie einen den Ventilkolben axial bewegenden Antrieb 4. Dieser Antrieb 4 ist beispielsweise durch einen Motor 5 gebildet und weist einen Hohlschaft 6 auf, in welchem eine zentrale Antriebsspindel 7 angeordnet ist. Der Hohlschaft 6 ist in einem Antriebsgehäuse 8 angeordnet, welches mit dem Ventilgehäuse 2 abgedichtet verbunden ist. Die Antriebsspindel 7 wird von einem Rotor 9 des Motors 5 angetrieben, so dass eine Rotationsbewegung der Antriebsspindel 7 eine axiale Bewegung des Ventilkolbens 3 ermöglicht. Das Ventilgehäuse 2, welches in einem Gehäuse 10 angeordnet ist, weist drei radiale Anschlüsse B, A, C auf, wobei zwei Arbeitsanschlüsse B, C vorgesehen sind, zwischen welchen ein Druckanschluss A angeordnet ist. Bei großen Kolbendurchmesser kommt es in Ventilen häufig, vor allem bei großen Druckunterschieden, zu großen axial auf den Ventilkolben 3 wirkenden hydraulischen/pneumatischen Kräften. Dadurch bedingt sind große Betätigungskräfte nötig. Diese wiederum müssen durch einen dementsprechend großen Antrieb bereitgestellt werden. Da keiner der Arbeitsanschlüsse B, C definiert von Druck entlastet werden kann, muss dafür gesorgt werden, dass die resultierenden Kräfte an dem Ventilkolben 3, welche diesen in eine erste Betätigungsrichtung bewegen wollen, gleich groß sind, wie die Kräfte, die diesen in eine zweite entgegengesetzte Betätigungsrichtung bewegen wollen. Der Ventilkolben 3 ist also druckausgeglichen. Damit wird es immer möglich, den Ventilkolben 3 unabhängig von den Druckanforderungen im Ventil, mit geringen Kräften zu bewegen. Dies wird durch die Formgebung des Ventilkolbens 3, so wie durch eine interne Verbindung der beiden Stirnseiten des Kolbens erreicht. Der Druckausgleich des Ventilkolbens 3 wird durch eine geschachtelte Buchsenbauweise realisiert. Dadurch kann ein Ventilkolben 3 mit einem größeren Durchmesser im Mittelbereich (A-Port) eingesetzt werden. Dieser bietet durch seine Symmetrie die Möglichkeit jeweils einen Sitz in die jeweilige Betätigungsrichtung darzustellen. Somit ist gewehrleistet, dass sowohl beim Anliegen des Ventilkolbens am Sitz A/B als auch am Sitz A/C ein Kräftegleichgewicht (Druckausgleich) gegenwärtig ist.

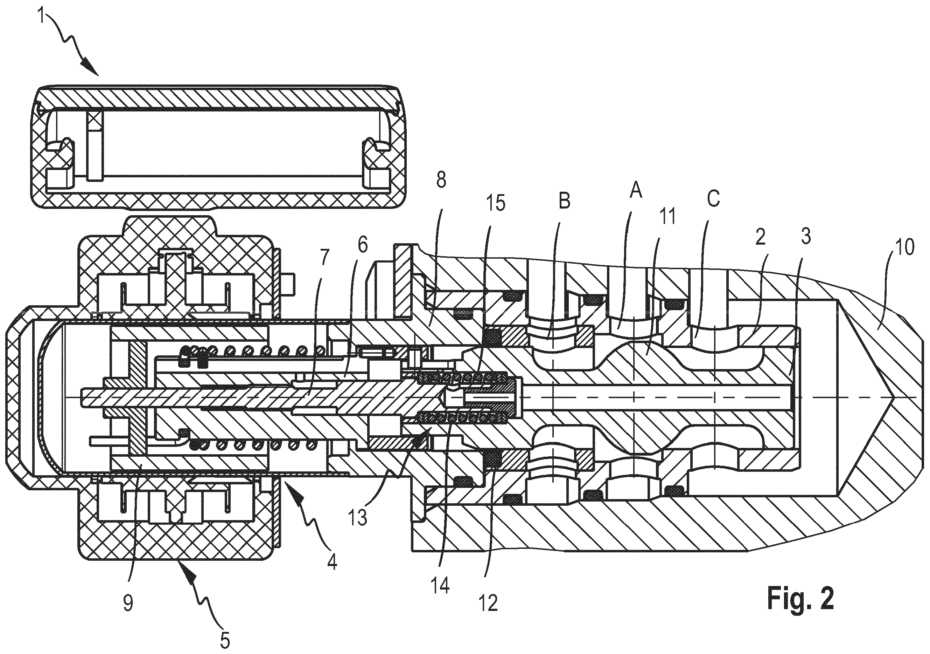

Wie insbesondere aus dem Längsschnitt gemäß Figur 2 ersichtlich ist, weist der Ventilkolben 3 einen kugelförmigen Abschnitt 11 auf, wobei dieser zur Abdichtung des jeweiligen, nicht beaufschlagten Arbeitsanschlusses B bzw. C gegen den Druckanschluss A an das Ventilgehäuse 2 anlegbar ist. Das Wegeventil 1 weist mit anderen Worten einen Kugelsitz auf, um die benötigte, hohe Dichtigkeit darzustellen. Der kugelförmige Schließkörper (Abschnitt 11) dichtet seinen jeweiligen Sitz am Ventilgehäuse 2 zuverlässig ab, auch wenn geometrische Fehler vorliegen oder aufgrund von Laufspielen eine Schrägstellung des Ventilkolbens 3 erfolgt. Da der Ventilkolben 3 druckausgeglichen ausgeführt ist, wird noch eine zweite Dichtung am Ventilkolben 3 benötigt, die die beiden Arbeitsanschlüsse B, C voneinander trennt, so dass über die Verbindung zum Druckausgleich des Ventilkolben 3 kein Medium vom ersten Arbeitsanschluss B zum zweiten Arbeitsanschluss C fließen kann. Bei dieser Dichtung handelt es sich um eine doppeltwirkende Stangendichtung 12 oder um zwei einfachwirkende Stangendichtungen, die entsprechend angeordnet sind. Die Stangendichtung 12, welche sich durch minimale Leckage sowie geringe Betätigungskräfte beim Verschieben des Ventilkolbens 3 auszeichnet, kann zusätzlich einen Kunststoffring aufweisen. Für das sichere Schließen der beiden Ventilsitze bedarf es einer definierten Vorspannung (Axialkraft) im Sitz. Da durch den Antrieb mittels Antriebsspindel 7 grundsätzlich keine Elastizität, bei dem Einfahren in den Sitz vorhanden ist und es somit zu einer Verspannung des Systems führen kann, ist eine zusätzlich in beide Betätigungsrichtungen wirkende Baugruppe 13 vorgesehen. Diese zeichnet sich durch eine Spiralfeder 14 aus sowie einen gestuften Einbauraum 15. Der gestufte Einbauraum 15 ermöglicht es zwei Widerlager zu erzeugen, an dem sich die eingesetzte Baugruppe 13 abstützen kann. Dadurch wirkt in beide Betätigungsrichtungen abhängig von der Spindelsteigung der Spindel 8 sowie der Federkonstante, nach Anlegen des Ventilkolbens 3 an der Sitzfläche, die gleiche Axialkraft auf den jeweiligen Ventilsitz. Zusätzlich können dadurch die Einzelteilkosten reduziert werden, da das elastische Bauelement kostenrelevante Einflüsse durch z.B. Bauteiltoleranzen ausgleicht.

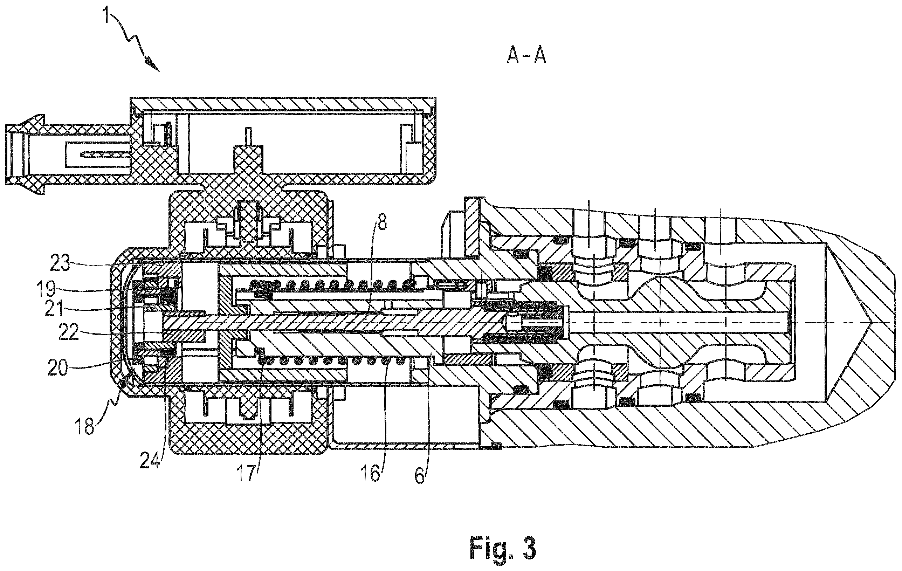

Figur 3 zeigt einen Längsschnitt einer zweiten Ausführungsform eines erfindungsgemäßen Wegeventils 1. Dieses ist grundsätzlich zum ersten Ausführungsbeispiel gleich aufgebaut. Daher werden lediglich die Unterschiede beschrieben. Um den Hub des Wegeventils 1 auf eine definierte Anzahl an Umdrehungen zu begrenzen, wird eine Stoppgeometrie eingesetzt, welche durch zwei ineinandergreifende Spiralkörper 16, 17 umgesetzt ist. Um die Axialposition der Antriebsspindel 8 zu sensieren, ist ein Untersetzungsgetriebe (Zykloidgetriebe 18) vorgesehen. Dieses zeichnet sich durch ein sehr großes Untersetzungsverhältnis aus. Somit kann bei der richtigen Wahl des Untersetzungsverhältnisses die gesamte Umdrehungsanzahl auf genau eine Umdrehung (max. 360°) an einer Rollscheibe 19 (Abtriebsscheibe) reduziert werden. Die Erfassung der absoluten Position kann nun über ein auf der Rollscheibe 19 angebrachtes 2 polige Magnettarget 20 sowie ein stirnseitig positioniertes 360° messendes Hallelement umgesetzt werden, welches nicht gezeigt ist. Das Zykloidgetriebe 18 weist ferner eine Kurvenscheibe 21, einen Exzenter 22, eine Zykloidenscheibe 23 sowie eine Feder 24 auf.

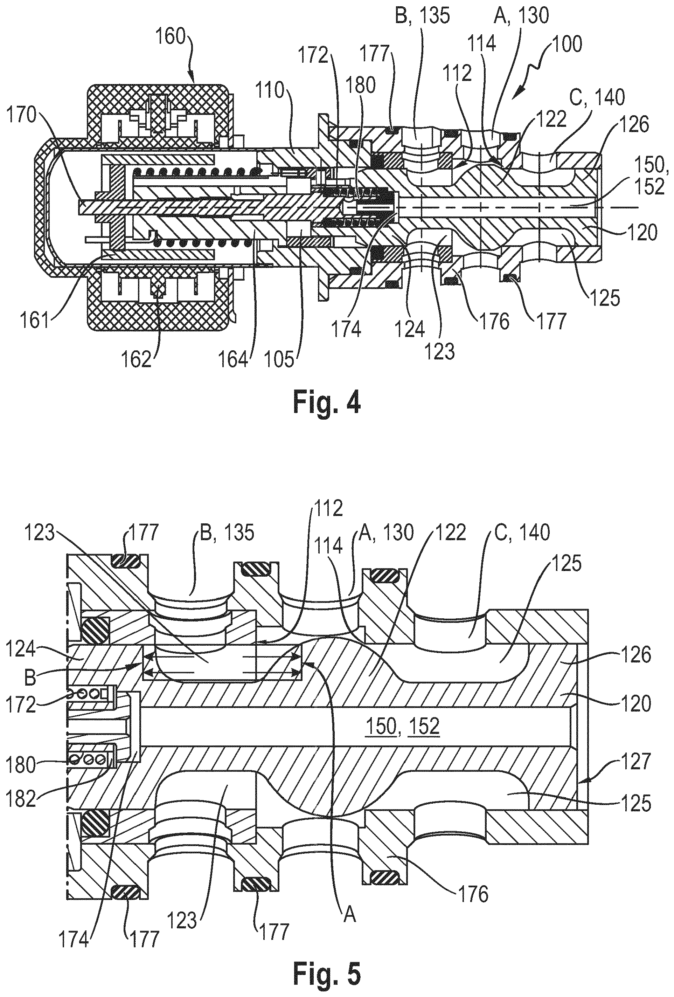

Die Figur 4 zeigt einen Längsschnitt einer Teilansicht einer Proportionalventilanordnung 100 entspricht dem Wegeventil 1 gemäss der Figuren 1, 2 und 3. Die Proportionalventilanordnung 100 ist zum Einsatz für Kältemittel geeignet und umfasst ein eine Ventilkörperkammer 105 aufweisendes Ventilgehäuse 110 zur Aufnahme eines Ventilkörpers 3, 120. Der Ventilkörper 120 ist innerhalb der Ventilkörperkammer 105 kontinuierlich - wie ein Stetigventil - überführbar ausgebildet. Zum Betätigen der Proportionalventilanordnung 100 ist ein elektrisch betätigbarer Antrieb 160 in Form eines Schrittmotors zum proportionalen Betätigen des Ventilkörpers 120 vorgesehen. Der Rotor 9, 161 des Schrittmotors ist hierbei in der Ventilkörperkammer 105 angeordnet, während der Stator 162 ausserhalb der Ventilkörperkammer 105 angeordnet ist.

Der Antrieb 160 treibt eine Spindel 7, 170 an, welche über ein selbsthemmendes Gewinde mit einem Hohlschaft 164 verbunden ist. Der Hohlschaft 164 wiederrum steht mit dem Ventilkörper 120 in Verbindung und überführt den Ventilkörper 120 translatorisch. Der Ventilkörper 120 weist einen kugelförmigen Abschnitt 11, 122 auf, welcher zwischen einem ersten Dichtsitz 112 und einem zweiten Dichtsitz 114 überführbar ist. Der Ventilkörper 120 hat einen ersten Führungsabschnitt 124 und einen zweiten Führungsabschnitt 126, welcher ein translatorisches Führen des Ventilkörpers 120 in dem Ventilgehäuse 110 ermöglicht. Der kugelförmige Abschnitt 122 befindet sich zwischen dem ersten Führungsabschnitt 124 und dem zweiten Führungsabschnitt 126.

Das Führen des Ventilkörpers 120 erfolgt innerhalb einer käfigförmigen Buchse 176, welche innerhalb des Gehäuses 10 angeordnet ist. Die käfigförmige Buchse 176 weist mehrere radiale Durchgänge auf, um eine fluidische Verbindung mit den Zuström- und Ausströmanschlüssen (130, 135, 140) zu ermöglichen. Zwischen den Bestandteilen der käfigförmigen Buchse 176 und dem Gehäuse 10 sind Dichtungen 177 angeordnet. Insgesamt umfasst das Ventilgehäuse 110 einen Zuströmanschluss A, 130, einen ersten Ausströmanschluss B, 135 und einen zweiten Ausströmanschluss C, 140.

Somit ist die Proportionalventilanordnung 100 als 3/2 Wegeventil ausgebildet, wobei die Anschlüsse 130, 135, 140 direkt nebeneinander angeordnete sind. Durch das Uberführen des Ventilkörpers 120 von dem ersten Dichtsitz 112 in den zweiten Dichtsitz 114 kann Fluid aus dem Zuströmanschluss 130 sowohl in den ersten Ausströmanschluss 135 und/ oder in den zweiten Ausströmanschluss 140 geströmt werden. Insbesondere in Verbindung mit der kraftausgeglichenen Anordnung ist der Ventilkörper 120 unabhängig von der Position zwischen dem ersten Dichtsitz 112 und dem zweiten Dichtsitz 114 leicht betätigbar. Dies gilt auch unabhängig von der Fluiddrucksituation, welche sich an den Anschlüssen 130, 135, 140 ergibt.

In dem Gehäuse 10 der Proportionalventilanordnung 100 sind an der käfigförmigen Buchse 176 ein erster Dichtsitz 112 und einen zweiter Dichtsitz 114 angeordnet. Der erste Dichtsitz 112 und der zweite Dichtsitz 114 befinden sich vor und nach dem kugelförmigen Abschnitt 122 des Ventilkörpers 120, wodurch sich zwei Endstellungen der Proportionalventilanordnung 100 ergeben. Der erste Dichtsitz 112 und der zweite Dichtsitz 114 befinden sich jeweils an einem ersten und einem zweiten Bestandteil der käfigförmigen Buchse 176, die koaxial zueinander angeordnet sind. Die Bestandteile der käfigförmigen Buchse 176 sind zur Montage der Proportionalventilanordnung 100 ineinander einführbar, wobei dazwischen der kugelförmige Anschnitt 122 angeordnet wird.

Der Ventilkörper 120 bildet zwischen dem ersten Führungsabschnitt 124 und dem kugelförmigen Abschnitt 122 einen ersten Zwischenraum 123 innerhalb der käfigförmigen Buchse 176 aus, der sich durch einen im Vergleich zum ersten Führungsabschnitt 124 geringeren Durchmesser des Ventilkörpers 120 auszeichnet. Der kugelförmige Abschnitt 122 hingegen hat einen Durchmesser, welcher etwas grösser als der Durchmesser des ersten Führungsabschnitts 124 ausgebildet ist. Zusätzlich bildet der Ventilkörper 120 zwischen dem zweiten Führungsabschnitt 126 und dem kugelförmigen Abschnitt 122 einen zweiten Zwischenraum 125 innerhalb der käfigförmigen Buchse 176 aus, der sich durch einen im Vergleich zum zweiten Führungsabschnitt 126 geringeren Durchmesser des Ventilkörpers 120 auszeichnet. Der kugelförmige Abschnitt 122 hingegen hat einen Durchmesser, welcher auch etwas grösser als der Durchmesser des zweiten Führungsabschnitts 126 ausgebildet ist.

Der Ventilkörper 120 weist einen Druckbypass 150 auf, um zwischen dem zweiten Ausströmanschluss 140 und der Ventilkörperkammer 105 eine Kommunikationsverbindung 152 bereitzustellen. Diese Kommunikationsverbindung 152 erstreckt sich unmittelbar durch den Ventilkörper 120 hindurch entlang die Längsachse des Ventilkörpers 120.

Innerhalb der Kommunikationsverbindung 152 des Ventilkörpers 120 befindet sich antriebsseitig ein gestufter Einbauraum 174. Der gestufte Einbauraum 174 nimmt die Spindel 170 teilweise in sich auf. Zusätzlich befindet sich in dem gestuften Einbauraum 174 eine Schliessvorrichtung 180. Die Schliessvorrichtung 180 ist zwischen der Spindel 170 und dem Ventilkörper 120 angeordnet, wobei die Schliessvorrichtung 180 dem Erzeugen einer axialen Vorspannung zwischen dem Ventilkörper 120 und dem ersten Dichtsitz 112 dient, sofern eine Anlage des Ventilkörpers 120 an den ersten Dichtsitz 112 eintritt. Gleichzeitig dient die Schliessvorrichtung 180 einer axialen Vorspannung zwischen dem Ventilkörper 120 und dem zweiten Dichtsitz 114, sofern eine Anlage des Ventilkörpers 120 an den zweiten Dichtsitz 114 eintritt. Durch die Schliessvorrichtung 180 ergibt sich somit sowohl bei Anlage des Ventilkörpers 120 an dem ersten Dichtsitz 112 als auch bei Anlage des Ventilkörpers 120 an den zweiten Dichtsitz 114 eine axiale Vorspannung, wodurch ein hohes Mass an Schliesssicherheit der Proportionalventilanordnung 100 gegeben ist. Wird die Spindel 170 in eine Endlage überführt, so wird durch die Schliessvorrichtung 180 verhindert, dass sich der Ventilkörper 120 in der Endlage im Dichtsitz 112, 114 verklemmt.

Die Figur 5 zeigt eine vergrösserte Teilansicht einer Proportionalventilanordnung 100. Der Ventilkörper 120 ist innerhalb der käfigförmigen Buchse 176 angeordnet und der kugelförmigen Abschnitt 122 des Ventilkörpers 120 befindet sich zwischen dem ersten Dichtsitz 112 und dem zweiten Dichtsitz 114 wodurch sich die zwei Endstellungen der Proportionalventilanordnung 100 ergeben. Der erste Dichtsitz 112 und der zweite Dichtsitz 114 befinden sich jeweils an einem ersten und einem zweiten Bestandteil der käfigförmigen Buchse 176 und sind koaxial zueinander angeordnet. Der Ventilkörper 120 umfasst den ersten Führungsabschnitt 124 und den zweiten Führungsabschnitt 126, welcher das Führen des Ventilkörpers 120 in der käfigförmigen Buchse 176 in dem Ventilgehäuse 110 ermöglicht. Der kugelförmige Abschnitt 122 befindet sich zwischen dem ersten Führungsabschnitt 124 und dem zweiten Führungsabschnitt 126. Der Ventilkörper 120 liegt an dem zweiten Dichtsitz 114 an.

Wenn der Ventilkörper 120 am ersten Dichtsitz 112 anliegt, weist eine axiale Projektionsfläche (B) des Ventilkörpers 120 aus dem ersten Zwischenraum 123 in Richtung des ersten Führungsabschnitts 124 die gleiche Grösse auf, wie eine axiale Projektionsfläche (A) aus dem ersten Zwischenraum 123 in Richtung des kugelförmigen Abschnitts 122 begrenzt in radialer Richtung durch den ersten Dichtsitz 112. Daraus resultiert ein Kräftegleichgewicht indem die axialen Komponenten der Projektionsflächen (A, B) in diesem Zustand die gleiche Grösse aufweist. Liegt beispielsweise am ersten Ausströmungsanschluss B, 135 Fluiddruck von ausserhalb der Proportionalventilanordnung 100 an, so ergibt sich daraus innerhalb der Proportionalventilanordnung 100 ein in Axialrichtung ausgeglichenes Kräftegleichgewicht des Ventilkörpers 120. Dadurch wird es für den elektrischen Antrieb 160 stark vereinfacht, den Ventilkörper 120 zu bewegen bzw. von einer ersten Position in eine zweite Position zu überführen.

Auf der gegenüberliegenden Seite des kugelförmigen Abschnitts 122 des Ventilkörpers 120, wird zwischen dem zweiten Führungsabschnitt 126 und dem kugelförmigen Abschnitt 122 ein zweiter Zwischenraum 125 ausgebildet. Wenn der Ventilkörper 120 am zweiten Dichtsitz 114 anliegt, so entspricht eine axiale Projektionsfläche des Ventilkörpers 120 aus dem zweiten Zwischenraum 125 in Richtung des kugelförmigen Abschnitts 122, begrenzt in radialer Richtung durch den zweiten Dichtsitz 114, und der stirnseitigen Projektionsfläche 127 an den zweiten Führungsabschnitt 126 der Grösse einer axialen Projektionsfläche aus dem zweiten Zwischenraum 125 in Richtung des zweiten Führungsabschnitts 126 und der axialen Projektionsfläche aus der Ventilkörperkammer 105 in Richtung des ersten Führungsabschnitts 124. Liegt beispielsweise am zweiten Ausströmungsanschluss C, 140 Fluiddruck von ausserhalb der Proportionalventilanordnung 100 an, so resultiert ebenfalls ein Kräftegleichgewicht weil die Summe axialen Komponenten der Projektionsflächen identisch sind. Bei Fluiddruck ergibt sich daraus ein in Axialrichtung ausgeglichenes Kräftegleichgewicht des Ventilkörpers 120, wodurch es für den elektrischen Antrieb 160 stark vereinfacht wird, den Ventilkörper 120 zu bewegen bzw. von einer ersten Position in eine zweite Position zu überführen.

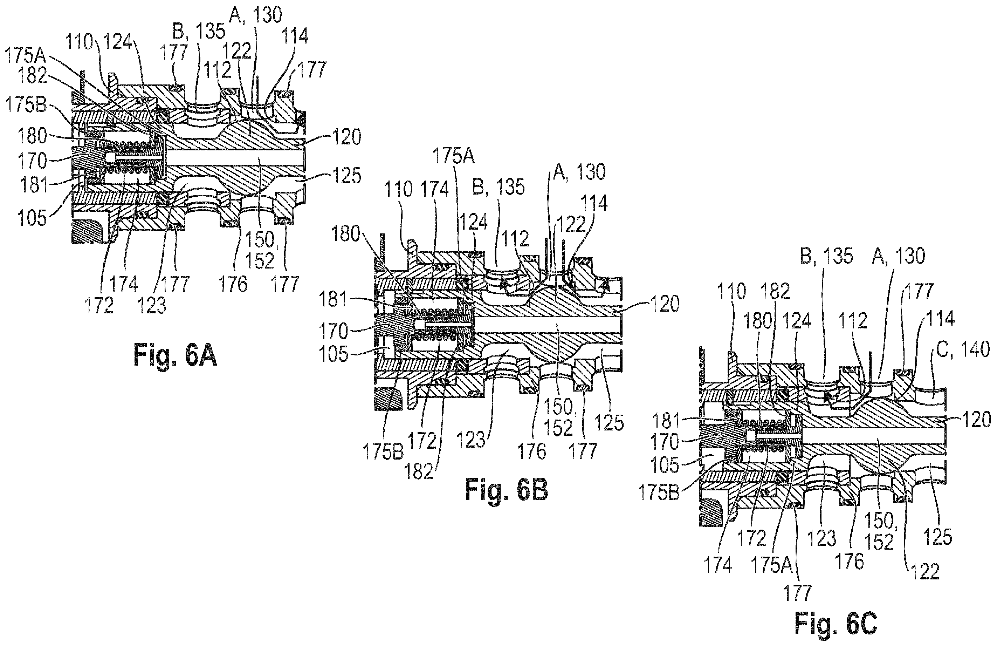

Die Figuren 6A, 6B und 6C zeigen weitere Teilansichten einer Proportionalventilanordnung 100 in verschiedenen Schaltstellungen. Der Ventilkörper 120 ist innerhalb der käfigförmigen Buchse 176 angeordnet und der kugelförmigen Abschnitt 122 des Ventilkörpers 120 befindet sich zwischen dem ersten Dichtsitz 112 und dem zweiten Dichtsitz 114, wodurch sich zwei Endstellungen der Proportionalventilanordnung 100 ergeben. Der erste Dichtsitz 112 und der zweite Dichtsitz 114 befinden sich jeweils an einem ersten und einem zweiten Bestandteil der käfigförmigen Buchse 176 und sind koaxial zueinander angeordnet. Der Ventilkörper 120 umfasst den ersten Führungsabschnitt 124 und den zweiten Führungsabschnitt 126, welcher ein translatorisches Führen des Ventilkörpers 120 in der käfigförmigen Buchse 176 in dem Ventilgehäuse 110 ermöglicht.

Die Figur 6A zeigt den Ventilkörper 120 anliegend an dem ersten Dichtsitz 112, wodurch eine Fluidverbindung von dem Zuströmanschluss 130 zum zweiten Ausströmanschluss 140 freigegeben ist. Der Ventilkörper 120 weist einen gestuften Einbauraum 174 zur Aufnahme der Spindel 170 und der Schliessvorrichtung 180 auf. Die Spindel 170 ist mit dem Hohlschaft 164 (nicht gezeigt) selbsthemmend verbunden und überträgt eine axiale Bewegung auf den Ventilkörper 120. Durch die Selbsthemmung zwischen dem Hohlschaft 164 und der Spindel 170 ist kein selbstständiges Verstellen, beispielsweise durch Druckschwankungen im Fluid oder andere äussere Einflüsse, der Position des Ventilkörpers 120 möglich. Die Schliessvorrichtung 180 umfasst ein Federelement 172, welches in Bezug auf die Spindel 170 koaxial angeordnet ist und sich innerhalb des gestuften Einbauraums 174 befindet. Das Federelement 172 ist zwischen zwei Scheibenkörpern 181, 182 angeordnet. Der gestufte Einbauraum 174 hat einen Hauptdurchmesser, welcher der Aufnahme der beiden Scheibenkörpern 181, 182 einschliesslich dem zwischen den Scheibenkörpern 181, 182 angeordneten Federelement 172 dient. Zusätzlich umfasst der gestufte Einbauraum 174 einen Abschnitt mit einem gegenüber dem Hauptdurchmesser kleineren Nebendurchmesser. Die beiden Scheibenkörper 181, 182 können nicht in den Abschnitt mit dem Nebendurchmesser eintreten, sondern werden durch die Federkraft des Federelements 172 auf einen ersten Anschlag 175A gedrückt, welcher die Stufe des Ubergangs vom Hauptdurchmesser auf den Nebendurchmesser innerhalb des gestuften Einbauraums 174 definiert. Am spindelseitigen Ende des gestuften Einbauraums 174 befindet sich ein zweiter Anschlag 175B in Form einer Distanzhülse, welcher analog zum ersten Anschlag 175A den Hauptdurchmesser und den kleineren Nebendurchmesser realisiert. Auch an der Distanzhülse können die beiden Scheibenkörper 180, 182 nicht in den Abschnitt mit dem Nebendurchmesser eintreten, sondern werden durch die Federkraft des Federelements 172 auf einen zweiten Anschlag 175B gedrückt.

In der Figur 6A befindet sich die Spindel 170 in einer zurückgezogenen Position, wobei der Ventilkörper 120 durch die Federkraft des Federelements 172 beim Anschlag des ersten Scheibenkörpers 181 an den zweiten Anschlag 175B in Form der Distanzhülse axial gegen den ersten Dichtsitz 112 vorgespannt ist. Die Spindel 170 kann sich also gegen die Vorspannung des Federelements 172 zumindest teilweise in axialer Richtung weiterbewegen, wenn der Ventilkörper 120 bereits in Anlage mit dem ersten Dichtungssitz 112 gelangt ist. Dadurch wird die axiale Bewegung der Spindel 170 gedämpft, wodurch ein Festklemmen in der Endlage des Ventilkörpers 120 verhindert wird.

Die Figur 6B zeigt den Ventilkörper 120 sowohl vom ersten Dichtsitz 112 als auch vom zweiten Dichtsitz 114 beabstandet, wodurch eine Fluidverbindung von dem Zuströmanschluss 130 zum ersten Ausströmanschluss 135 und zum zweiten Ausströmanschluss 140 freigegeben ist.

Die Figur 6C zeigt den Ventilkörper 120 anliegend an dem zweiten Dichtsitz 114, wodurch eine Fluidverbindung von dem Zuströmanschluss 130 zum ersten Ausströmanschluss 135 freigegeben ist. Die Spindel 170 befindet sich in einer in Richtung des gestuften Einbauraums 174 vorgezogenen Position. Der Ventilkörper 120 ist durch die Federkraft des Federelements 172 beim Anschlag des zweiten Scheibenkörpers 182 an den ersten Anschlag 175A axial gegen den zweiten Dichtsitz 114 vorgespannt. Die Spindel 170 kann sich also gegen die Vorspannung des Federelements 172 zumindest teilweise in axialer Richtung weiterbewegen -also tiefer in den gestuften Einbauraum 174 eintauchen - wenn der Ventilkörper 120 bereits in Anlage mit dem zweiten Dichtungssitz 114 gelangt ist. Dadurch wird die axiale Bewegung der Spindel 170 gedämpft, wodurch ein Festklemmen in der Endlage des Ventilkörpers 120 verhindert wird.

Der gestufte Einbauraum 174 ist vollständiger Bestandteil der Kommunikationsverbindung 152, welche sich in Längsrichtung durch den Ventilkörper 120 erstreckt. Somit verläuft der Druckbypass 150 durch den Ventilkörper 120, durch den gestuften Einbauraum 174 und somit durch die Schliessvorrichtung 180 hindurch, wodurch sich eine kompakte Bauweise und ein einfacher sowie symmetrischer Druckausgleich des Fluides ergibt, was insgesamt die kraftausgeglichene Konstellation des Ventilkörpers 120 ermöglicht.

### Bezugszeichenliste

| | |
|---|---|
| 1 | Wegeventil |
| 2 | Ventilgehäuse |
| 3, 120 | Ventilkolben |
| 4 | Antrieb |
| 5 | Motor |
| 6, 164 | Hohlschaft |
| 7, 170 | Antriebsspindel |
| 8 | Antriebsgehäuse |
| 9 | Rotor |
| 10 | Gehäuse |
| 11, 122 | Kugelförmiger Abschnitt |
| 12 | Stangendichtung |
| 13 | Baugruppe |
| 14 | Spiralfeder |
| 15 | Einbauraum |
| 16, 17 | Spiralkörper |
| 18 | Zykloidgetriebe |
| 19 | Rollscheibe |
| 20 | Magnettarget |
| 21 | Kurvenscheibe |
| 22 | Exzenter |
| 23 | Zykloidscheibe |
| 100 | Proportionalventilanordnung |
| 105 | Ventilkörperkammer |
| 110 | Ventilgehäuse |
| 112 | Erster Dichtsitz |
| 114 | Zweiter Dichtsitz |
| 3. 120 | Ventilkörper |
| 11, 122 | Kugelförmiger Abschnitt |
| 123 | Erster Zwischenraum |
| 124 | Erster Führungsabschnitt |
| 125 | Zweiter Zwischenraum |
| 126 | Zweiter Führungsabschnitt |
| 127 | Stirnseitige Projektionsfläche |
| A, 130 | Zuströmanschluss |
| B, 135 | Erster Ausströmanschluss |
| C, 140 | Zweiter Ausströmanschluss |
| 150 | Druckbypass |
| 152 | Kommunikationsverbindung |
| 160 | Elektrischen Antrieb |
| 161 | Rotor |
| 162 | Stator |
| 6, 164 | Hohlschaft |
| 170 | Spindel |
| 172 | Federelement |
| 174 | Gestufter Einbauraum |
| 175A | Erster Anschlag |
| 175B | Zweiter Anschlag |
| 176 | Buchse |
| 177 | Dichtungen |
| 180 | Schliessvorrichtung |
| 181 | Erster Scheibenkörper |
| 182 | Zweiter Scheibenkörper |

## Patentansprüche

1. Proportionalventilanordnung (100) für Kältemittel, mit:
einem eine Ventilkörperkammer (105) aufweisendes Ventilgehäuse (110),
einem Ventilkörper (120), welcher innerhalb der Ventilkörperkammer (105) angeordnet und zwischen einer ersten Position und einer zweiten Position überführbar ausgebildet ist,
wobei das Ventilgehäuse (110) einen ersten Dichtsitz (112) und einen zweiten Dichtsitz (114) aufweist, und der Ventilkörper (120) zwischen dem ersten Dichtsitz (112) und dem zweiten Dichtsitz (114) überführbar ist
**dadurch gekennzeichnet, dass**
der Ventilkörper (120) einen kugelförmigen Abschnitt (122) aufweist, welcher zwischen dem ersten Dichtsitz (112) und dem zweiten Dichtsitz (114) überführbar angeordnet ist, wobei der Ventilkörper (120) einen ersten Führungsabschnitt (124) und einen zweiten Führungsabschnitt (126) zum Führen des Ventilkörpers (120) in dem Ventilgehäuse (110) umfasst, und wobei zwischen dem ersten Führungsabschnitt (124) und dem zweiten Führungsabschnitt (126) der kugelförmige Abschnitt (122) angeordnet ist.

2. Proportionalventilanordnung (100) nach Anspruch 1, wobei zwischen dem ersten Führungsabschnitt (124) und dem kugelförmigen Abschnitt (122) ein erster Zwischenraum (123) ausgebildet ist.

3. Proportionalventilanordnung (100) nach Anspruch 2, wobei in einem Zustand in welchem der Ventilkörper (120) an dem ersten Dichtsitz (112) anliegt, eine axiale Projektionsfläche des ersten Zwischenraums (123) in Richtung des ersten Führungsabschnitts (124) die gleiche Grösse aufweist wie eine axiale Projektionsfläche des ersten Zwischenraums (123) in Richtung des kugelförmigen Abschnitts (122).

4. Proportionalventilanordnung (100) nach Anspruch 1 oder 2, wobei zwischen dem zweiten Führungsabschnitt (126) und dem kugelförmigen Abschnitt (122) ein zweiter Zwischenraum (126) ausgebildet ist.

5. Proportionalventilanordnung (100) nach Anspruch 4, wobei in einem Zustand in welchem der Ventilkörper (120) an dem zweiten Dichtsitz (114) anliegt, eine axiale Projektionsfläche des zweiten Zwischenraums (125) in Richtung des kugelförmigen Abschnitts (122) die gleiche Grösse aufweist wie eine axiale Projektionsfläche des zweiten Zwischenraums (125) in Richtung des zweiten Führungsabschnitts (126).

6. Proportionalventilanordnung (100) nach einem der vorstehenden Ansprüche, wobei das Ventilgehäuse (110) einen Zuströmanschluss (130), einen ersten Ausströmanschluss (135) und einen zweiten Ausströmanschluss (140) aufweist.

7. Proportionalventilanordnung (100) nach einem der vorstehenden Ansprüche, wobei die Proportionalventilanordnung (100) einen Druckbypass (150) aufweist, welcher den zweiten Ausströmanschluss (140) mit der Ventilkörperkammer (105) verbindet.

8. Proportionalventilanordnung (100) nach Anspruch 7, wobei der Druckbypass (150) eine Kommunikationsverbindung (152) durch den Ventilkörper (120) hindurch aufweist.

9. Proportionalventilanordnung (100) nach einem der vorstehenden Ansprüche, wobei die Proportionalventilanordnung (100) einen elektrisch betätigbaren Antrieb (160) zum proportionalen Betätigen des Ventilkörpers (120) aufweist.

10. Proportionalventilanordnung (100) nach Anspruch 9, wobei der Antrieb (160) zumindest teilweise in der Ventilkörperkammer (105) angeordnet ist.

11. Proportionalventilanordnung (100) nach Anspruch 9 oder 10, wobei der Antrieb (160) einen Schrittmotor umfasst, welcher über eine Spindel (170) mit dem Ventilkörper(120) verbunden ist.

12. Proportionalventilanordnung (100) Anspruch 11, wobei die Spindel (170) mit einem Hohlschaft (164) selbsthemmend verbunden ist.

## Claims

1. Proportional valve arrangement (100) for refrigerant, comprising:
a valve housing (110) comprising a valve body chamber (105),
a valve body (120) which is arranged within the valve body chamber (105) and is configured to be transferable between a first position and a second position,
wherein the valve housing (110) comprises a first sealing seat (112) and a second sealing seat (114), and the valve body (120) is transferable between the first sealing seat (112) and the second sealing seat (114),
**characterized in that**
the valve body (120) comprises a spherical section (122) which is arranged to be transferable between the first sealing seat (112) and the second sealing seat (114), wherein the valve body (120) comprises a first guide section (124) and a second guide section (126) for guiding the valve body (120) in the valve housing (110), and wherein the spherical section (122) is arranged between the first guide section (124) and the second guide section (126).

2. Proportional valve arrangement (100) according to claim 1, wherein a first interspace (123) is formed between the first guide section (124) and the spherical section (122).

3. Proportional valve arrangement (100) according to claim 2, wherein in a state in which the valve body (120) bears against the first sealing seat (112), an axial projection area of the first interspace (123) in the direction of the first guide section (124) comprises the same size as an axial projection area of the first interspace (123) in the direction of the spherical section (122).

4. Proportional valve arrangement (100) according to claim 1 or 2, wherein a second interspace (126) is formed between the second guide section (126) and the spherical section (122).

5. Proportional valve arrangement (100) according to claim 4, wherein in a state in which the valve body (120) bears against the second sealing seat (114), an axial projection area of the second interspace (125) in the direction of the spherical section (122) comprises the same size as an axial projection area of the second interspace (125) in the direction of the second guide section (126).

6. Proportional valve arrangement (100) according to one of the preceding claims, wherein the valve housing (110) comprises an inflow port (130), a first outflow port (135) and a second outflow port (140).

7. Proportional valve arrangement (100) according to one of the preceding claims, wherein the proportional valve arrangement (100) comprises a pressure bypass (150) which connects the second outflow port (140) to the valve body chamber (105).

8. Proportional valve arrangement (100) according to claim 7, wherein the pressure bypass (150) comprises a communication connection (152) through the valve body (120).

9. Proportional valve arrangement (100) according to one of the preceding claims, wherein the proportional valve arrangement (100) comprises an electrically actuable drive (160) for the proportional actuation of the valve body (120).

10. Proportional valve arrangement (100) according to claim 9, wherein the drive (160) is arranged at least partially in the valve body chamber (105).

11. Proportional valve arrangement (100) according to claim 9 or 10, wherein the drive (160) comprises a stepper motor which is connected to the valve body (120) via a spindle (170).

12. Proportional valve arrangement (100) according to claim 11, wherein the spindle (170) is connected to a hollow shaft (164) in a self-locking manner.

## Revendications

1. Agencement de vanne proportionnelle (100) pour fluide frigorigène, comprenant :
un boîtier de vanne (110) présentant une chambre de corps de vanne (105),
un corps de vanne (120) qui est disposé à l'intérieur de la chambre de corps de vanne (105) et qui est réalisé de manière à pouvoir être transféré entre une première position et une deuxième position,
dans lequel le boîtier de vanne (110) présentant un premier siège d'étanchéité (112) et un deuxième siège d'étanchéité (114), et le corps de vanne (120) est configuré de manière à pouvoir être transféré entre le premier siège d'étanchéité (112) et le deuxième siège d'étanchéité (114),
**caractérisé en ce que**
le corps de vanne (120) présente une partie sphérique (122) qui est disposée de manière à pouvoir être transférée entre le premier siège d'étanchéité (112) et le deuxième siège d'étanchéité (114), dans lequel le corps de vanne (120) comprend une première section de guidage (124) et une deuxième section de guidage (126) servant à guider le corps de vanne (120) dans le boîtier de vanne (110), et dans lequel la partie sphérique (122) est disposée entre la première section de guidage (124) et la deuxième section de guidage (126).

2. Agencement de vanne proportionnelle (100) selon la revendication 1, dans lequel un premier espace (123) est formé entre la première section de guidage (124) et la partie sphérique (122).

3. Agencement de vanne proportionnelle (100) selon la revendication 2, dans lequel, dans un état dans lequel le corps de vanne (120) se trouve en contact avec le premier siège d'étanchéité (112), une surface de projection axiale du premier espace (123) dans la direction de la première section de guidage (124) présente la même taille qu'une surface de projection axiale du premier espace (123) dans la direction de la partie sphérique (122).

4. Agencement de vanne proportionnelle (100) selon la revendication 1 ou 2, dans lequel un deuxième espace (126) est formé entre la deuxième section de guidage (126) et la partie sphérique (122).

5. Agencement de vanne proportionnelle (100) selon la revendication 4, dans lequel, dans un état dans lequel le corps de vanne (120) se trouve en contact avec le deuxième siège d'étanchéité (114), une surface de projection axiale du deuxième espace (125) dans la direction de la partie sphérique (122) présente la même taille qu'une surface de projection axiale du deuxième espace (125) dans la direction de la deuxième section de guidage (126).

6. Agencement de vanne proportionnelle (100) selon l'une des revendications précédentes, dans lequel le boîtier de vanne (110) présente un raccord d'entrée (130), un premier raccord de sortie (135) et un deuxième raccord de sortie (140).

7. Agencement de vanne proportionnelle (100) selon l'une des revendications précédentes, dans lequel l'agencement de vanne proportionnelle (100) présente une dérivation de pression (150) qui relie le deuxième raccord de sortie (140) à la chambre de corps de vanne (105).

8. Agencement de vanne proportionnelle (100) selon la revendication 7, dans lequel la dérivation de pression (150) présente une connexion de communication (152) à travers le corps de vanne (120).

9. Agencement de vanne proportionnelle (100) selon l'une des revendications précédentes, dans lequel l'agencement de vanne proportionnelle (100) présente un entraînement à commande électrique (160) pour l'actionnement proportionnel du corps de vanne (120).

10. Agencement de vanne proportionnelle (100) selon la revendication 9, dans lequel l'entraînement (160) est disposé au moins en partie à l'intérieur de la chambre de corps de vanne (105).

11. Agencement de vanne proportionnelle (100) selon la revendication 9 ou 10, dans lequel l'entraînement (160) comprend un moteur pas à pas qui est relié au corps de vanne (120) par le biais d'une broche (170).

12. Agencement de vanne proportionnelle (100) selon la revendication 11, dans lequel la broche (170) est reliée de manière autobloquante à une tige creuse (164).
